# EUROPEAN PATENT SPECIFICATION

(11) **EP 3 864 306 B1**
(45) Date of publication and mention of the grant of the patent: **17.08.2022**
(21) Application number: 19784042.4
(22) Date of filing: 07.10.2019
(51) Int. Cl.: F16B 13/06

(54) **EXPANSION ANCHOR WITH BULGED ZONE**
SPREIZDÜBEL MIT VORGEWÖLBTER ZONE
CHEVILLE À EXPANSION COMPRENANT UNE ZONE RENFLÉE

(30) Priority: 09.10.2018 EP 18199327
(43) Date of publication of application: 18.08.2021
(73) Proprietor: Hilti Aktiengesellschaft, 9494 Schaan (LI)
(72) Inventor: SHIMAHARA, Hideki, 9472 Grabs (CH)
(74) Representative: Hilti Aktiengesellschaft Corporate Intellectual Property
(86) International application number: PCT/EP2019/077047
(87) International publication number: WO 2020/074423

(56) References cited:
- WO-A1-2008/003456
- DE-A1-102009 044 559

## Description

The invention relates to an expansion anchor according to the preamble of claim 1. Such an expansion anchor comprises an anchor bolt, and at least one expansion shell located at the anchor bolt, wherein the anchor bolt comprises a wedge zone for expanding the at least one expansion shell, an abutment zone forming a rearward stop for the expansion shell, the abutment zone being located rearwardly of the wedge zone, and a rear zone for intruding tensile force into the anchor bolt, the rear zone being located rearwardly of the abutment zone.

EP2848825 A1 discloses an expansion anchor with an expansion sleeve that has at least one web on its inner side, which web engages a groove provided in the neck zone of the anchor bolt. During installation, the web is displaced radially outwardly by the wedge zone of the anchor bolt, i.e. the material of the web is activated, to yield particularly wide expansion.

DE2256822 A1 shows an expansion anchor in which a rotational lock is provided between the expansion sleeve and the anchor bolt. This rotational lock might be formed by a groove located in the neck zone of the anchor bolt, and a corresponding protrusion, which protrudes from the expansion sleeve.

EP0515916 A2 and DE3411285 A1 describe fasteners. In both cases, sleeves interlock with inner bolts via toothings.

WO17067945 A1 describes a method for anchoring an expansion anchor in a hole, in which the expansion anchor is first expanded and the space between the wall of the hole and the anchor bolt is then filled with a hardenable mass, such that the hardenable mass reaches the abutment zone of the anchor bolt.

WO2008/003456 A1 discloses an expansion anchor, in which the anchor bolt is surrounded by elastic spreading elements. When these elastic spreading elements are axially compressed, they expand radially.

It is an object of the invention to provide an expansion anchor which, whilst providing good and reliable performance, especially in laterally loaded situations, can be manufactured particularly easily and at particularly low expense and effort, and which can also provide added functionality.

This object is achieved by an expansion anchor according to claim 1. Dependent claims refer to preferred embodiments of the invention.

According to the invention, located between the abutment zone and the rear zone, and spaced from the abutment zone, the anchor bolt comprises, as an integral part of the anchor bolt, a bulged zone, which radially protrudes on the anchor bolt.

Thus, the invention proposes to provide the anchor bolt in a region located rearwardly of and at some distance from the abutment zone with a zone of locally increased diameter, namely the bulged zone. Amongst other, this bulged zone can directly transfer lateral loads into the surrounding hole wall, thereby improving anchor performance. Due to its position relatively high up on the anchor bolt, it can do so without detrimentally interfering with the anchoring mechanism. Moreover, the bulged zone can increase symmetry of the expansion anchor, since it can form a mirror image of the wedge zone, which can be helpful from a manufacturing point of view, in particular when cross wedge rolling is employed.

The bulged zone is spaced from the abutment zone, i.e. the bulged zone and the abutment zone are arranged a distance apart. The bulged zone is in an axial position located between the abutment zone and the rear zone, and has some distance from the abutment zone. Preferably, the anchor bolt has an intermediate zone located between the bulged zone and the abutment zone, wherein, the intermediate zone is preferably threadless. The bulged zone radially protrudes on the anchor bolt, i.e. the bulged zone juts out in the radial direction when compared to its surroundings, in particular when compared to the intermediate zone and/or at least a forward region of the rear zone. In particular, the bulged zone can form a ring surrounding the longitudinal axis of the anchor bolt.

The intermediate zone connects the abutment zone with the bulged zone and with the rear zone, i.e. it is located between the abutment zone and the bulged zone and located between the abutment zone and the rear zone. In the intermediate zone, the anchor bolt is preferably cylindrical, in particular cylindrical with a non-circular base, with the non-circularity being caused, at least amongst others, by intermediate zone grooves. The expansion shell can be axially spaced from the intermediate zone.

The anchor bolt is an elongate body. The expansion shell is located adjacent to the anchor bolt, so that it can be, for the purpose of anchoring the expansion anchor, radially displaced when the anchor bolt is loaded in the rearwards direction.

The anchor bolt advantageously comprises a neck zone accommodating at least parts of the expansion shell, the neck zone being located rearwardly of the wedge zone and/or between the wedge zone and the abutment zone. At least a part of the expansion shell, preferably a significant part of the expansion shell, axially overlaps the neck zone, at least before installation of the expansion anchor. In the neck zone, the anchor bolt is preferably cylindrical, in particular cylindrical with a non-circular base, with the non-circularity preferably being caused, at least amongst others, by at least one neck zone groove.

The bulged zone is an integral part of the anchor bolt, i.e. the bulged zone and at least a section of the anchor bolt are one piece. Preferably, the wedge zone, if present the neck zone, the abutment zone, if present the intermediate zone, and the rear zone of the anchor bolt are integral, which can ease manufacturing and improve performance. It is particularly preferred if the rear zone, the bulged zone, the abutment zone and preferably also the wedge zone are integral, i.e. one piece. The wedge zone, if present the neck zone, the abutment zone, if present the intermediate zone, and the rear zone are non-overlapping, i.e. separate, in the axial direction. In particular, the wedge zone is adjacent to the neck zone, the neck zone is adjacent to the abutment zone, the abutment zone is adjacent to the intermediate zone, the intermediate zone is adjacent to the bulged zone and/or the bulged zone is adjacent to the rear zone.

The anchor bolt defines a longitudinal axis, which advantageously can also be the longitudinal axis of the expansion anchor. Following the usual definition, the longitudinal axis can in particular be that axis that runs in the longitudinal direction, i.e. in the long direction of the anchor bolt. Where the terms "radially", "axially", "longitudinally", "circumferentially", "forwards", "rearwards", "back", and so forth are used, this should in particular be understood with respect to the longitudinal axis of the anchor bolt.

In the wedge zone, the anchor bolt forms a wedge for the expansion shell, which wedge converges towards the rear of the anchor bolt, so that the wedge zone can radially displace the expansion shell when the anchor bolt is loaded in the rearwards direction. For example, the anchor bolt can be conical in the wedge zone. However, more complex converging designs, including, for example, groove shaped axial wedge zone channels extending in the wedge zone, can be particularly preferred.

In the abutment zone, the anchor bolt has a shape that blocks a rearward movement of the expansion shell relative to the anchor bolt. Thus, the abutment zone can advance the expansion shell into a hole when the anchor bolt is inserted into a hole. In particular, the anchor bolt can have greater maximum diameter and/or maximum radius in the abutment zone when compared to the neck zone and preferably also when compared to the intermediate zone.

The rear zone is for introducing rearwardly directed tensile forces into the anchor bolt, i.e. for loading the anchor. Preferably, the anchor bolt is threaded, in particular threaded throughout, in the rear zone, wherein the thread allows force transmission. Thus, the rear zone is preferably a thread zone, in particular an outer thread zone. However, in an alternative embodiment, the anchor bolt can also have a larger-diameter head in the rear zone, which is particularly preferred for low load applications.

In particular, the thread of the rear zone does not extend into the bulged zone, i.e. the thread of the rear zone is remote from the bulged zone. In particular, the intermediate zone, the bulged zone and/or the neck zone are threadless.

The intermediate zone is preferably at least twice as long, in the axial direction, as the abutment zone, more preferably at least three times as long. It is particularly useful if the neck zone and the intermediate zone have same length. This can further increase symmetry, and the higher symmetry can further improve the manufacturing process and performance, due to the resulting symmetry of force during manufacturing and operation.

Preferably, the anchor bolt and/or the expansion shell are steel parts each. They can for example comprise carbon steel or stainless steel.

In the bulged zone, the anchor bolt has preferably larger maximum radius, and more preferably also larger maximum diameter, than in the rear zone and/or in the intermediate zone.

According to a particularly advantageous embodiment, in the bulged zone, the anchor bolt has preferably larger maximum radius, and more preferably also larger maximum diameter, than in the abutment zone. This can concentrate the effect of the bulged zone on the bulged zone and can facilitate installation.

According to another advantageous embodiment, in the bulged zone, the anchor bolt has larger maximum radius, and more preferably also larger maximum diameter, than in the wedge zone. This can further can facilitate installation and/or give a particular reliable expansion of the expansion shell.

In all cases, maximum radius and maximum diameter can, in particular, relate to radii originating from the longitudinal axis or diameters crossing the longitudinal axis, respectively.

As already mentioned above, the anchor bolt can have, expediently, a, preferably, threadless intermediate zone, located between the bulged zone and the abutment zone. Whilst being easy to manufacture, this allows placing the bulged zone relatively far to the rear, thereby improving lateral load uptake. The intermediate zone and/or the neck zone can have longitudinally running grooves each.

Advantageously, spacing between the abutment zone and the bulged zone is at least the length (i.e. the longitudinal extension) of the abutment zone.

Preferably, the intermediate zone has greater longitudinal extension than the abutment zone and/or, if present, the neck zone has greater longitudinal extension than the abutment zone, which can further ease manufacturing and/or improve performance

Preferably, the distance of a least parts of the bulged zone from the abutment zone equals the distance of a least parts of the wedge zone from the abutment zone. In other words, a mirror image of the wedge zone generated by a mirror plane traversing the abutment zone perpendicular to the longitudinal axis at least partly overlaps the bulged zone in the axial direction. This high symmetry with respect to the abutment zone can further ease manufacturing, in particular if cross wedge rolling is employed.

The bulged zone can be provided with bulged zone channels. These bulged zone channels preferably extend in the longitudinal direction. More preferably, they run parallel to the longitudinal axis of the anchor bolt. The bulged zone channels can support radial compression of the bulged zone, thereby easing anchor installation. Moreover, the bulged zone channels can allow fluid passage, for example passage of a hardenable mass, axially past the bulged zone. Finally, they can increase symmetry and therefore facilitate manufacturing, in particular if the wedge zone is also provided with channels.

Preferably, the bulged zone channels are surface grooves. This can further ease manufacturing. In particular, the surface grooves can be located in the lateral surface of the bulged zone and extend radially towards the longitudinal axis.

As already mentioned above, the wedge zone is advantageously provided with wedge zone channels. This can improve anchor bolt symmetry, thereby facilitate manufacturing, and or improve anchor performance. Moreover, the wedge zone channels can support radial compression of the anchor bolt at its front end, thereby easing anchor installation. The wedge zone channels preferably extend in the longitudinal direction. More preferably, they run parallel to the longitudinal axis of the anchor bolt. If the anchor bolt has a transition zone and/or a tip zone located in front of the wedge zone, the wedge zone channels can also extend through at least one or both of these additional zones.

Preferably, the wedge zone channels are surface grooves. This can further ease manufacturing. In particular, the surface grooves can be located in the lateral surface of the wedge zone and extend radially towards the longitudinal axis.

Expediently, at least some of the wedge zone channels, more preferably all of the wedge zone channels, are axially aligned with different bulged zone channels. In other words, some or all wedge zone channels lie in virtual extensions of different wedge zone channels each. This can further improve symmetry of force and facilitate manufacturing.

In the abutment zone, the anchor bolt preferably comprises an abutment ring, which radially protrudes on the anchor bolt, in particular with respect to both the neck zone and the intermediate zone. This abutment ring can form a forwardly-facing ring shoulder, which allows particularly efficient expansion shell engagement whilst being easy to manufacture in the inventive setup. The abutment ring surrounds the longitudinal axis of the anchor bolt. It protrudes on the anchor bolt in the radial direction, i.e. it juts out over its surroundings in the radial direction, in particular it juts out over the neck zone and the intermediate zone in the radial direction. The bulged zone and/or the rear zone is spaced from the abutment ring, in particular via the intermediate zone. In particular, the abutment ring can define the length, i.e. the longitudinal extension, of the abutment zone, i.e. the length of the abutment zone equals the length of the abutment ring. Preferably, the abutment ring is the abutment zone.

Expediently, the expansion shell is an expansion sleeve surrounding the anchor bolt. This is particularly efficient and easy to manufacture.

In the rear zone, the anchor bolt preferably comprises an outer thread, as already mentioned above. This, whilst being easy to manufacture, allows particular efficient force transfer. A nut can be screwed onto the thread.

The invention also includes a method for manufacturing an inventive expansion anchor, wherein the anchor bolt of the expansion anchor is formed using a cross wedge rolling step. Due to its relatively high symmetry, the inventive design can facilitate cross wedge rolling.

The invention also relates to a method for installing an inventive expansion anchor, wherein the expansion anchor is inserted into a hole, thereby positioning the bulged zone in an area of the hole in which the minimum diameter of the hole is smaller than the maximum diameter of the anchor bolt in the bulged zone. Thus, in the bulged zone, the anchor bolt has excess diameter with respect to the hole and an interference fit is created between the anchor bolt and the substrate surrounding the hole in the bulged zone.

Features that are described here in connection with the inventive expansion anchor can also be used in connection with the inventive methods and features that are described here in connection with the inventive methods can also be used in connection with the inventive expansion anchor.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.
- Figure 1:: is a perspective view of an embodiment of an inventive expansion anchor;
- Figure 2:: is a perspective view of the anchor bolt only of the expansion anchor of figure 1;
- Figure 3:: is a side view of the anchor bolt only of the expansion anchor of figure 1;
- Figure 4:: is a cross-section, 4 - 4, according to figure 3, of the anchor bolt only of the expansion anchor of figure 1;
- Figure 5:: is a cross-section, 5 - 5, according to figure 3, of the anchor bolt only of the expansion anchor of figure 1; and
- Figure 6:: shows the anchor of figure 1, located in a hole in a substrate, in longitudinal sectional view.

The figures show an embodiment of an inventive expansion anchor. The shown expansion anchor is of the stud type and has an elongate anchor bolt 10 defining a longitudinal axis 99, and an expansion shell 30, arranged adjacent to the anchor bolt 10 in a front or tip region of the anchor bolt 10. In the present embodiment, the expansion shell 30 is an expansion sleeve, which surrounds the anchor bolt 10.

The anchor bolt 10 has, in its front region or tip region, a wedge zone 12 designed for radially expanding the expansion shell 30 when the wedge zone 12 is drawn into the expansion shell 30 in the rearwards direction, i.e. when the expansion shell 30 is moved forwards relative to the wedge zone 12 onto the wedge zone 12. For this purpose, the lateral surface of the anchor bolt 10 converges in the wedge zone 12 towards the rear of the anchor bolt 10, i.e. it converges towards the expansion shell 30, at least before the anchor is installed. Focus of convergence is preferably on the longitudinal axis 99.

In the present example, the anchor bolt 10 also has a transition zone 42, which is located forwards of and adjacent to the wedge zone 12, and a tip zone 41, which is located forwards of and adjacent to the transition zone 42. In the transition zone 42, the rearward convergence is smaller as compared to the wedge zone 12 or the rearward convergence is even zero, but preferably not reverse, i.e. it is not a forward convergence. In the present example, convergence is absent, i.e. zero, in the transition zone 42. In the tip zone 41, the lateral surface of the anchor bolt 10 converges towards the front end of the anchor.

The anchor bolt 10 has a neck zone 13, which is located adjacent to and rearwards of the wedge zone 12. The expansion shell 30 at least partly surrounds this neck zone 13, at least before installation the anchor.

Located at the rearward end of the neck zone 13, the anchor bolt 10 has an abutment zone 14, in which the anchor bolt 10 comprises an abutment ring, radially protruding on the anchor bolt 10 and forming a ring-shape shoulder facing forwards for axially engaging the expansion shell 30 and for advancing the expansion shell 30 forwards.

In the present case, the wedge zone 12 and the neck zone 13 are, by way of example, integral with the rest of the anchor bolt 10. However, a multi-piece design of the anchor bolt 10, in particular in which the wedge zone 12 and the neck zone 13 are separate from the remainder of the anchor bolt 10, is also possible.

In a rear region of the anchor bolt 10, the anchor bolt 10 has a rear zone 17, which is characterized in that the anchor bolt 10 is provided with an outer thread in this rear zone 17. The outer thread provides a load-introducing structure for introducing rearwardly-directed load into the anchor bolt 10.

Axially between the rear zone 17 and the abutment zone 14, the anchor bolt 10 has an intermediate zone 15, in which the maximum diameter d of the anchor bolt 10 is smaller when compared to the rear zone 17 and/or to the abutment zone 14. The rear zone 17 is adjacent to the abutment zone 14 and could be adjacent to the rear zone 17. However, in the present case, the anchor bolt 10 also has a bulged zone 16, located axially between the intermediate zone 15 und the rear zone 17. The bulged zone 16 is adjacent to the intermediate zone 15 and adjacent to the rear zone 17. The neck zone 13 and the intermediate zone 15 have the same length. The distance of the wedge zone 12 to the abutment zone 14 and the distance of the bulged zone 16 to the abutment zone 14 are the same.

The bulged zone 16 protrudes radially on the anchor bolt 10. In the bulged zone 16, the anchor bolt 10 has larger maximum radius r, measured from the longitudinal axis 99, than in the intermediate zone 15 and in the rear zone 17. Preferably, in the bulged zone 16, the anchor bolt 10 also has larger maximum diameter d than in the intermediate zone 15 and in the rear zone 17. Thus, the bulged zone 16 forms a ring surrounding the longitudinal axis 99, which juts out with respect to its surroundings. The bulged zone 16 can abut on the hole wall when the anchor is radially loaded, allowing force transfer to the substrate and thereby protecting the expansion mechanism provided by the wedge zone 12 and the expansion shell 30.

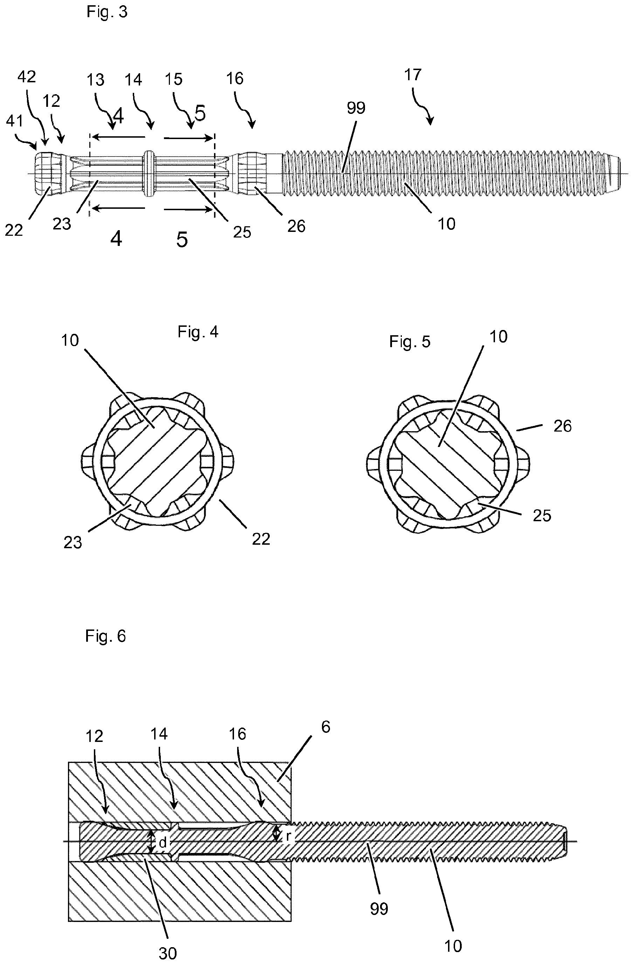

As can be seen particularly well in figure 6, in the bulged zone 16, the anchor bolt 10 preferably has larger maximum radius r, and preferably also larger maximum diameter d, than in the abutment zone 14, and more preferably also larger maximum radius r, and preferably also larger maximum diameter d, than in the wedge zone 12. This leads to particularly good support high up in the hole in the substrate 6. The radius r is measured originating from the longitudinal axis 99 and the diameter d through the longitudinal axis 99 in each case.

The expansion shell 30 is provided with a plurality of slits 36, which originate from the front end of the expansion shell 30 and extend towards the rear end of the expansion shell 30. The slits 36 can facilitate radial expansion of the expansion shell 30.

In the neck zone 13, the anchor bolt 10 is provided, on its lateral surface, with a plurality of neck zone grooves 23. These neck zone grooves 23 are radially accessible from the outside of the anchor bolt 10. The neck zone grooves 23 are longitudinal grooves each, extending parallel to the longitudinal axis 99. In cross-section, the neck zone 13 deviates from a circle at the neck zone grooves 23. The neck zone grooves 23 extend along the entire neck zone 13, into the wedge zone 12. The neck zone 13 is threadless.

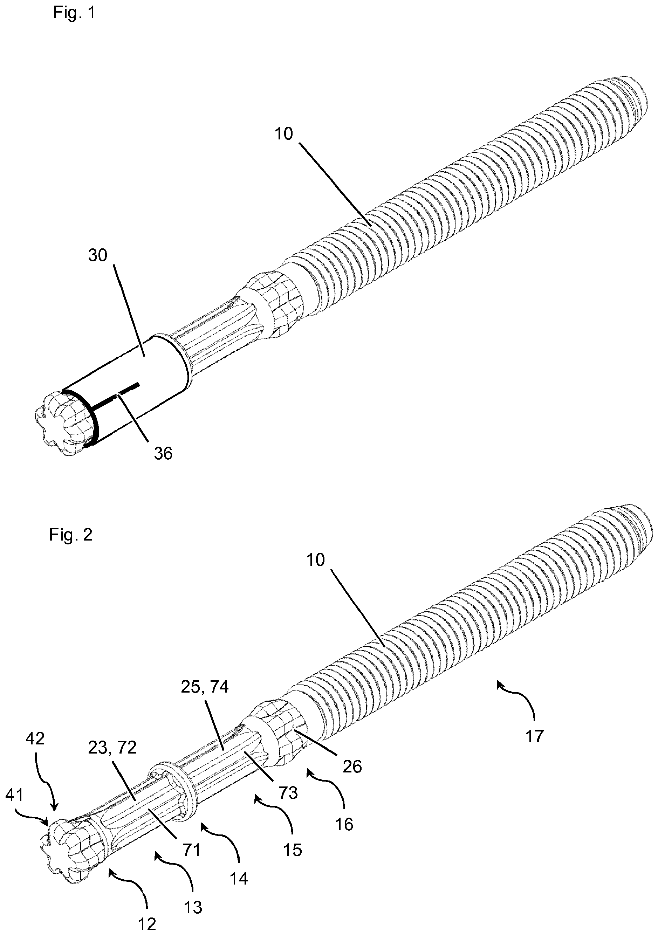

Each of the neck zone grooves 23 has a first neck zone groove side wall and a second neck zone groove side wall, wherein these two neck zone groove side walls limit the respective neck zone groove 23 in the circumferential direction. Thus, the neck zone groove side walls are circumferential side walls. In figure 2, the first neck zone groove side wall of an exemplary neck zone groove 23 has been marked with reference numeral 71 and the second neck zone groove side wall of this exemplary neck zone groove 23 has been marked with reference numeral 72.

The intermediate zone 15 is threadless. However, in the intermediate zone 15, the anchor bolt 10 is provided, on its lateral surface, with a plurality of intermediate zone grooves 25. These intermediate zone grooves 25 are radially accessible from the outside of the anchor bolt 10. The intermediate zone grooves 25 are longitudinal grooves each, extending parallel to the longitudinal axis 99. In cross-section, the intermediate zone 15 deviates from a circle at the intermediate zone grooves 25. The intermediate zone grooves 25 extend along the entire intermediate zone 15, into the bulged zone 16.

Each of the intermediate zone grooves 25 has a first intermediate zone groove side wall and a second intermediate zone groove side wall, wherein these two intermediate zone groove side walls limit the respective intermediate zone groove 25 in the circumferential direction. Thus, the intermediate zone groove side walls are circumferential side walls. In figure 2, the first intermediate zone groove side wall of an exemplary intermediate zone groove 25 has been marked with reference numeral 73 and the second intermediate zone groove side wall of this exemplary intermediate zone groove 25 has been marked with reference numeral 74.

Each of the intermediate zone grooves 25 overlaps one of the neck zone grooves 23 in the radial and circumferential directions. The intermediate zone grooves 25 and the neck zone grooves 23 are aligned, so that the intermediate zone grooves 25 form extensions of the neck zone grooves 23.

The expansion shell 30 engages in the neck zone grooves 23. For this purpose, the expansion shell has axially extending thickenings, which project into the neck zone grooves 23. This engagement can form a rotational lock, which prevents rotating of the expansion shell 30 around the anchor bolt 10.

The bulged zone 16 is provided with bulged zone channels 26, extending longitudinally through the bulged zone 16. The bulged zone channels 26 are surface grooves in the present case. The bulged zone channels 26 allow passage of a fluid medium, for example of a hardenable mortar. Moreover, the bulged zone channels 26 can take up material of the anchor bolt 10, facilitating deformation of the bulged zone 16 and therefore facilitating insertion of the anchor bolt 10 into a hole.

The wedge zone 12, the transition zone 42 and the tip zone 41 are provided with wedge zone channels 22, each extending longitudinally through the wedge zone 12, the transition zone 42 and the tip zone 41. These wedge zone channels 22 can facilitate manufacturing and/or improve installation and anchorage. The wedge zone channels 22 are aligned with the bulged zone channels 26. Both the wedge zone channels 22 and the bulged zone channels 26 are offset, in the circumferential direction, from both the neck zone grooves 23 and from the intermediate zone grooves 25, as can be seen particularly well in figures 4 and 5.

In its front region, the anchor bolt 10 has a relatively high mirror symmetry: the intermediate zone 15 is, within usual manufacturing tolerances, mirror symmetric to the neck zone 13, and the bulged zone 16 has some symmetric resemblance to the wedge zone 12, all with respect to a mirror plane running perpendicular to the longitudinal axis 99 through the abutment zone 14. Moreover, the wedge zone 12 is provided with longitudinally running surface grooves (namely the wedge zone channels 22), and so is the bulged zone 16 (namely the bulged zone channels 26), and at least parts of the bulged zone 16 have the same axial distance from the abutment zone 14 as at least parts of the wedge zone 12. This high symmetry can give a particular symmetric distribution of forces during a cross wedge rolling manufacturing process.

When the anchor is installed, it is introduced, front end first, into a hole in a substrate 6. Subsequently, the anchor bolt 10, together with its wedge zone 12, is pulled back rearwardly, in particular by tightening a not-shown nut provided on the thread of the rear zone 17 of the anchor bolt 10. As a consequence, the wedge zone 12 is drawn into the front-end region of the expansion shell 30 and the expansion shell 30 is radially displaced, thereby anchoring the expansion anchor. The resulting configuration is shown in figure 6. The bulged zone 16 is so dimensioned that it creates an interference fit with the substrate 6 when located in the hole.

## Claims

1. Expansion anchor comprising
- an anchor bolt (10), and
- at least one expansion shell (30) located at the anchor bolt (10),
- wherein the anchor bolt (10) comprises
- a wedge zone (12) for expanding the at least one expansion shell (30),
- an abutment zone (14) forming a rearward stop for the expansion shell (30), the abutment zone (14) being located rearwardly of the wedge zone (12), and
- a rear zone (17) for intruding tensile force into the anchor bolt (10), the rear zone (17) being located rearwardly of the abutment zone (14),
**characterized in that**
located between the abutment zone (14) and the rear zone (17), and spaced from the abutment zone (14), the anchor bolt (10) comprises, as an integral part of the anchor bolt (10), a bulged zone (16), which radially protrudes on the anchor bolt (10).

2. Expansion anchor according to claim 1,
**characterized in that**
the rear zone (17), the bulged zone (16), the abutment zone (14) and preferably also the wedge zone (12) are integral.

3. Expansion anchor according to any one of the preceding claims, **characterized in that**
in the bulged zone (16), the anchor bolt (10) has larger maximum radius (r) and/or larger maximum diameter (d) than in the abutment zone (14).

4. Expansion anchor according to any one of the preceding claims, **characterized in that**
the anchor bolt comprises a, preferably threadless, intermediate zone (15), located between the bulged zone (16) and the abutment zone (14).

5. Expansion anchor according to claim 4,
**characterized in that**
the intermediate zone (15) has greater longitudinal extension than the abutment zone (14) zone.

6. Expansion anchor according to any one of the preceding claims,
**characterized in that**
the distance of a least parts of the bulged zone (16) from the abutment zone (14) equals the distance of a least parts of the wedge zone (12) from the abutment zone (14).

7. Expansion anchor according to any one of the preceding claims, **characterized in that**
the bulged zone (16) is provided with bulged zone channels (26).

8. Expansion anchor according to claim 7,
**characterized in that**
the bulged zone channels (26) run parallel to the longitudinal axis (99) of the anchor bolt (10).

9. Expansion anchor according to any one of claims 7 or 8,
**characterized in that**
the bulged zone channels (26) are surface grooves.

10. Expansion anchor according to any one of the preceding claims, **characterized in that**
the wedge zone (12) is provided with wedge zone channels (22).

11. Expansion anchor according to claim 10,
**characterized in that**
the wedge zone channels (22) are surface grooves.

12. Expansion anchor according to any of claims 7 to 9, together with any of claims 10 or 11,
**characterized in that**
at least some of the wedge zone channels (22) are axially aligned with different bulged zone channels (26).

13. Expansion anchor according to any one of the preceding claims,
**characterized in that**
in the abutment zone (14), the anchor bolt (10) comprises an abutment ring, which radially protrudes on the anchor bolt (10).

14. Expansion anchor according to any one of the preceding claims, **characterized in that**
in the rear zone (17), the anchor bolt (10) comprises an outer thread.

15. Method for manufacturing an expansion anchor according to any one of the preceding claims, wherein the anchor bolt (10) of the expansion anchor is formed using a cross wedge rolling step.

16. Method for installing an expansion anchor according to any one of claims 1 to 14, wherein the expansion anchor is inserted into a hole, thereby positioning the bulged zone (16) in an area of the hole in which the minimum diameter of the hole is smaller than the maximum diameter (d) of the anchor bolt (10) in the bulged zone (16).

## Patentansprüche

1. Spreizanker umfassend
- einen Ankerbolzen (10), und
- mindestens einen Spreizschale (30), die sich an dem Ankerbolzen (10) befindet,
- wobei der Ankerbolzen (10) Folgendes umfasst
- eine Keilzone (12) zum Aufspreizen der mindestens einen Spreizschale (30),
- eine Anlagezone (14), die einen rückwärtigen Anschlag für die Spreizschale (30) ausbildet, wobei sich die Anlagezone (14) rückwärtig der Keilzone (12) befindet, und
- eine hintere Zone (17) zum Einleiten einer Zugkraft in den Ankerbolzen (10), wobei sich die hintere Zone (17) rückwärtig der Anlagezone (14) befindet,
**dadurch gekennzeichnet, dass**
befindlich zwischen der Anlagezone (14) und der hinteren Zone (17) und von der Anlagezone (14) beabstandet, der Ankerbolzen (10) als ein integrales Teil des Ankerbolzens (10) eine ausgebauchte Zone (16) umfasst, die an dem Ankerbolzen (10) radial vorsteht.

2. Spreizanker nach Anspruch 1,
**dadurch gekennzeichnet, dass**
die hintere Zone (17), die ausgebauchte Zone (16), die Anlagezone (14) und vorzugsweise ebenso die Keilzone (12) integral sind.

3. Spreizanker nach einem der vorhergehenden Ansprüche,
**dadurch gekennzeichnet, dass**
in der ausgebauchten Zone (16) der Ankerbolzen (10) einen größeren maximalen Radius (r) und/oder größeren maximalen Durchmesser (d) als in der Anlagezone (14) aufweist.

4. Spreizanker nach einem der vorhergehenden Ansprüche,
**dadurch gekennzeichnet, dass**
der Ankerbolzen eine vorzugsweise gewindelose Zwischenzone (15) umfasst, die sich zwischen der ausgebauchten Zone (16) und der Anlagezone (14) befindet.

5. Spreizanker nach Anspruch 4,
**dadurch gekennzeichnet, dass**
die Zwischenzone (15) eine größere Längserstreckung als die Anlagezone (14) aufweist.

6. Spreizanker nach einem der vorhergehenden Ansprüche,
**dadurch gekennzeichnet, dass**
der Abstand von mindestens Teilen der ausgebauchten Zone (16) von der Anlagezone (14) gleich dem Abstand von mindestens Teilen der Keilzone (12) von der Anlagezone (14) ist.

7. Spreizanker nach einem der vorhergehenden Ansprüche,
**dadurch gekennzeichnet, dass**
die ausgebauchte Zone (16) mit Kanälen (26) der ausgebauchten Zone versehen ist.

8. Spreizanker nach Anspruch 7,
**dadurch gekennzeichnet, dass**
die Kanäle (26) der ausgebauchten Zone parallel zu der Längsachse (99) des Ankerbolzens (10) verlaufen.

9. Spreizanker nach einem der Ansprüche 7 oder 8,
**dadurch gekennzeichnet, dass**
die Kanäle (26) der ausgebauchten Zonen Oberflächenrillen sind.

10. Spreizanker nach einem der vorhergehenden Ansprüche,
**dadurch gekennzeichnet, dass**
die Keilzone (12) mit Kanälen (22) der Keilzone versehen ist.

11. Spreizanker nach Anspruch 10,
**dadurch gekennzeichnet, dass**
die Kanäle (22) der Keilzone Oberflächenrillen sind.

12. Spreizanker nach einem der Ansprüche 7 bis 9 zusammen mit einem der Ansprüche 10 oder 11,
**dadurch gekennzeichnet, dass**
mindestens einige der Kanäle (22) der Keilzone mit unterschiedlichen Kanälen (26) der ausgebauchten Zonen axial ausgerichtet sind.

13. Spreizanker nach einem der vorhergehenden Ansprüche,
**dadurch gekennzeichnet, dass**
in der Anlagezone (14) der Ankerbolzen (10) einen Anlagering umfasst, der an dem Ankerbolzen (10) radial vorsteht.

14. Spreizanker nach einem der vorhergehenden Ansprüche,
**dadurch gekennzeichnet, dass**
in der hinteren Zone (17), der Ankerbolzen (10) ein Außengewinde umfasst.

15. Verfahren zum Herstellen eines Spreizankers nach einem der vorhergehenden Ansprüche, wobei der Ankerbolzen (10) des Spreizankers unter Verwendung eines Querkeilwalzschritts ausgebildet wird.

16. Verfahren zum Installieren eines Spreizankers nach einem der Ansprüche 1 bis 14, wobei der Spreizanker in ein Loch eingeführt wird, wobei dadurch die ausgebauchte Zone (16) in einem Bereich des Lochs positioniert wird, in dem der minimale Durchmesser des Lochs kleiner als der maximale Durchmesser (d) des Ankerbolzens (10) in der ausgebauchten Zone (16) ist.

## Revendications

1. Ancrage à expansion comprenant
- un boulon d'ancrage (10), et
- au moins une coque d'expansion (30) située au niveau du boulon d'ancrage (10),
- dans lequel le boulon d'ancrage (10) comprend
- une zone de coin (12) pour l'expansion de l'au moins une coque d'expansion (30),
- une zone de butée (14) formant une butée arrière pour la coque d'expansion (30), la zone de butée (14) étant située à l'arrière de la zone de coin (12), et
- une zone arrière (17) pour introduire une force de traction dans le boulon d'ancrage (10), la zone arrière (17) étant située à l'arrière de la zone de butée (14),
**caractérisé en ce que**
situé entre la zone de butée (14) et la zone arrière (17), et espacé de la zone de butée (14), le boulon d'ancrage (10) comprend, en tant que partie intégrante du boulon d'ancrage (10), une zone bombée (16), qui fait saillie radialement sur le boulon d'ancrage (10).

2. Ancrage à expansion selon la revendication 1,
**caractérisé en ce que**
la zone arrière (17), la zone bombée (16), la zone de butée (14) et de préférence également la zone de coin (12) sont solidaires.

3. Ancrage à expansion selon l'une quelconque des revendications précédentes, **caractérisé en ce que**
dans la zone bombée (16), l'ancrage à expansion (10) possède un rayon maximal (r) plus grand et/ou un diamètre maximal (d) plus grand que dans la zone de butée (14).

4. Ancrage à expansion selon l'une quelconque des revendications précédentes, **caractérisé en ce que**
le boulon d'ancrage comprend une zone intermédiaire (15), de préférence non filetée, située entre la zone bombée (16) et la zone de butée (14).

5. Ancrage à expansion selon la revendication 4,
**caractérisé en ce que**
la zone intermédiaire (15) possède une extension longitudinale plus grande que celle de la zone de butée (14).

6. Ancrage à expansion selon l'une quelconque des revendications précédentes, **caractérisé en ce que**
la distance d'au moins une partie de la zone bombée (16) par rapport à la zone de butée (14) est égale à la distance d'au moins une partie de la zone de coin (12) par rapport à la zone de butée (14).

7. Ancrage à expansion selon l'une quelconque des revendications précédentes, **caractérisé en ce que**
la zone bombée (16) est pourvue de canaux de zone bombée (26).

8. Ancrage à expansion selon la revendication 7,
**caractérisé en ce que**
les canaux de la zone bombée (26) s'étendent parallèlement à l'axe longitudinal (99) du boulon d'ancrage (10).

9. Ancrage à expansion selon l'une quelconque des revendications 7 ou 8, **caractérisé en ce que**
les canaux de la zone bombée (26) sont des rainures de surface.

10. Ancrage à expansion selon l'une quelconque des revendications précédentes, **caractérisé en ce que**
la zone de coin (12) est pourvue de canaux de zone de coin (22).

11. Ancrage à expansion selon la revendication 10,
**caractérisé en ce que**
les canaux de la zone de coin (22) sont des rainures de surface.

12. Ancrage à expansion selon l'une quelconque des revendications 7 à 9, conjointement avec l'une quelconque des revendications 10 ou 11,
**caractérisé en ce que**
au moins quelques uns des canaux de la zone de coin (22) sont axialement alignés avec différents canaux de la zone bombée (26).

13. Ancrage à expansion selon l'une quelconque des revendications précédentes, **caractérisé en ce que**
dans la zone de butée (14), le boulon d'ancrage (10) comprend une bague de butée, qui fait saillie radialement sur le boulon d'ancrage (10).

14. Ancrage à expansion selon l'une quelconque des revendications précédentes, **caractérisé en ce que**
dans la zone arrière (17), le boulon d'ancrage (10) comprend un filetage extérieur.

15. Procédé permettant de fabriquer un ancrage à expansion selon l'une quelconque des revendications précédentes, dans lequel le boulon d'ancrage (10) de l'ancrage à expansion est formé à l'aide d'une étape de laminage en coin croisé.

16. Procédé permettant d'installer un ancrage à expansion selon l'une quelconque des revendications 1 à 14, dans lequel l'ancrage à expansion est inséré dans un trou, positionnant ainsi la zone bombée (16) dans une zone du trou dans laquelle le diamètre minimal du trou est inférieur au diamètre maximal (d) du boulon d'ancrage (10) dans la zone bombée (16).
